(19) Europäisches Patentamt
European Patent Office
Office européen des brevets

(11) **EP 1 912 350 A1**

(12) **EUROPEAN PATENT APPLICATION**
published in accordance with Art. 153(4) EPC

(43) Date of publication:
**16.04.2008 Bulletin 2008/16**

(51) Int Cl.:
***H04B 7/26*** (2006.01)

(21) Application number: **06781588.6**

(86) International application number:
**PCT/JP2006/314676**

(22) Date of filing: **25.07.2006**

(87) International publication number:
**WO 2007/015394 (08.02.2007 Gazette 2007/06)**

(84) Designated Contracting States:
**DE FR GB**

(30) Priority: **01.08.2005 JP 2005222976**

(71) Applicants:
- **NTT DoCoMo, Inc.**
  **Chiyoda-ku**
  **Tokyo 100-6150 (JP)**
- **MITSUBISHI ELECTRIC CORPORATION**
  **Chiyoda-ku**
  **Tokyo 100-8310 (JP)**

(72) Inventors:
- **SAKAISHI, Takuya**
  **c/o Mitsubishi Electric Corp.**
  **Chiyoda-ku,**
  **Tokyo 100-8310 (JP)**

- **ISHIOKA, Kazuaki**
  **c/o Mitsubishi Electric Corp.**
  **Chiyoda-ku,**
  **Tokyo 100-8310 (JP)**
- **INOUE, Yuji**
  **c/o Mitsubishi Electric Corp.**
  **Chiyoda-ku,**
  **Tokyo 100-8310 (JP)**
- **HIGUCHI, Shingo**
  **c/o Mitsubishi Electric Corp.**
  **Chiyoda-ku,**
  **Tokyo 100-8310 (JP)**

(74) Representative: **Sajda, Wolf E. et al**
**MEISSNER, BOLTE & PARTNER**
**Postfach 86 06 24**
**81633 München (DE)**

(54) **AUTO FREQUENCY CONTROL METHOD**

(57) An auto frequency control method of this invention has a first step of a base station (BS) detecting a frequency deviation $\Delta f_{BS}$ of an uplink signal transmitted from a mobile station (MS), a second step of the base station (BS) transmitting an instructing amount of increase or decrease $f_{cont}$ of the transmission frequency $f_{MS}$ of the uplink signal to the mobile station (MS) on the basis of the frequency deviation $\Delta f_{BS}$ of the uplink signal, and a third step of the mobile station (MS) shifting the transmission frequency $f_{MS}$ of the uplink signal according to the instructing amount of increase or decrease $f_{cont}$ transmitted from the base station (BS).

FIG. 1

Transmission : $f_{BS}$

$f_{cont}(=-\triangle f_{BS})$

Reception : $f_{MS}' = f_{BS} + \triangle f_{MS}$

Transmission : $f_{MS} = f_{MS}' + f_{cont} - f_{offset}$

BS

MS

Reception : $f_{BS}' = f_{MS} + \triangle f_{BS} = f_{BS} + \triangle f_{MS} + f_{cont} - f_{offset} + \triangle f_{BS}$
$\triangle f_{MS} = \triangle f_{BS} \rightarrow f_{BS}' = f_{BS} + \triangle f_{BS} - f_{offset}$

EP 1 912 350 A1

**Description**

Field of the Invention

The present invention relates to an auto frequency control method for use in a cellular phone system and so on.

Background of the Invention

Auto frequency control (referred to as AFC: Auto Frequency Control from here on) for a mobile station MS in a conventional cellular phone system includes detection of a frequency deviation $\Delta f_{MS}$ from, for example, the amount of phase rotation per unit time of a downlink signal, such as a pilot symbol having a known modulation pattern, which is transmitted from a base station BS, and control of TCXO (crystal oscillator) of the mobile station so as to cancel out this $\Delta f_{MS}$.

Hereinafter, conventional AFC will be explained concretely. In a case in which a downlink signal transmitted at a frequency $f_{BS}$ from a base station BS is observed, as a signal of frequency $f_{MS}' = f_{BS} + \Delta f_{MS}$ which includes a frequency deviation $\Delta f_{MS}$, by a mobile station MS, the mobile station MS performs TCXO control on the signal so as to raise the reception frequency of the signal by $\Delta f_{MS}$. The mobile station thus absorbs the frequency shift due to a temperature change, between the base station's transmission frequency and the mobile station's reception frequency so as to have a good reception state (for example, refer to Patent Reference 1).

However, when the mobile station MS moves, $\Delta f_{MS}$ detected by the mobile station MS includes a frequency shift due to a Doppler shift in addition to the variation in the frequency due to the temperature change. Therefore, the mobile station performs TCXO control on the signal to shift the reception frequency of the signal by $\Delta f_{MS}$ so as to absorb $\Delta f_{MS}$ including the influence of the Doppler shift.

At this time, in the cellular phone system, such as a CDMA system, in which transmission and reception are simultaneously carried out on the basis of a common oscillator, not only the reception frequency of the mobile station MS but the frequency of an uplink signal from the mobile station is shifted by $\Delta f_{MS}$, so that the uplink signal is transmitted at a frequency given by the following equation:

$$f_{MS} = f_{MS}' = f_{BS} + \Delta f_{MS} \, .$$

Furthermore, because a Doppler shift $\Delta f_{BS}$ is also added to the uplink signal which is transmitted from the mobile station MS with its frequency being shifted by $\Delta f_{MS}$, the resultant frequency of the uplink signal which the base station BS receives is given by the following equation:

$$f_{BS}' = f_{MS} + \Delta f_{BS} = f_{BS} + \Delta f_{MS} + \Delta f_{BS} \, .$$

In this case, because $\Delta f_{BS} \approx \Delta f_{MS}$, the influence of double the Doppler shift shown by the following equation is added to the frequency of the signal which the base station BS receives, and therefore the uplink communication quality degrades greatly.

$$\Delta f_{MS} + \Delta f_{BS} \approx 2\Delta f_{BS} \, .$$

Because this degradation of the uplink communication quality further causes breakdown of loop control using uplink and downlink bidirectional communications, such as transmission power control, the uplink communication quality degradation also has a bad influence upon the operation of the whole system, including degradation in the downlink communication quality. Particularly, in communications at the time of high speed movements in a cellular phone system, such as a W-CDMA system, using a high frequency band, which has been in practical use in recent years, measures against this influence are indispensable remarkably.

Patent Reference 1: JP-A-2002-026 769.

Because the conventional auto frequency control method is implemented as mentioned above, a problem resides in that when a mobile station is moving at such a speed as one which makes the influence of Doppler shifts to become large, some degradation occurs in the communication performance of the cellular phone system including those of base stations and mobile stations.

The present invention has been made in order to solve the above-mentioned problems, and it is therefore an object of the present invention to implement an auto frequency control method which cannot be easily influenced by any Doppler shift by enabling a base station and/or a mobile station to transmit frequency deviation information and an instructing amount of increase or decrease in frequency, which are detected by each of them, between them.

## Disclosure of the Invention

In accordance with the present invention, there is provided an auto frequency control method including: a first step of a base station detecting a frequency deviation of an uplink signal transmitted from a mobile station; a second step of the above-mentioned base station transmitting an instructing amount of increase or decrease in a transmission frequency of the above-mentioned uplink signal to the above-mentioned mobile station on a basis of the frequency deviation of the above-mentioned uplink signal; and a third step of the above-mentioned mobile station shifting the transmission frequency of the above-mentioned uplink signal according to the above-mentioned instructing amount of increase or decrease transmitted from the above-mentioned base station.

According to the present invention, because the above-mentioned mobile station performs automatic frequency control having a simple structure which follows only the amount of frequency increase and decrease of the above-mentioned uplink transmission from the above-mentioned base station, when uplink and downlink bidirectional communications are carried out, a large amount of degradation can be prevented from occurring in the reception quality of either of the bidirectional communications, and therefore the bidirectional communications can be kept in a good state.

## Brief Description of the Figures

Fig. 1    is a diagram showing an example of the operation of a cellular phone system using an auto frequency control method in accordance with Embodiment 1 of the present invention;

Fig. 2    is a flow chart showing a process carried out by a base station BS shown in Fig. 1;

Fig. 3    is a flow chart showing a process carried out by a mobile station MS shown in Fig. 1;

Fig. 4    is a diagram showing an example of the operation of a cellular phone system using an auto frequency control method in accordance with Embodiment 2 of the present invention;

Fig. 5    is a flow chart showing a process carried out by a base station BS shown in Fig. 4;

Fig. 6    is a flow chart showing a process carried out by a mobile station MS shown in Fig. 4;

Fig. 7    is a diagram showing an example of the operation of a cellular phone system using an auto frequency control method in accordance with Embodiment 3 of the present invention;

Fig. 8    is a flow chart showing a process carried out by a base station BS shown in Fig. 7; and

Fig. 9    is a flow chart showing a process carried out by a mobile station MS shown in Fig. 7.

## Preferred Embodiments of the Invention

Hereinafter, in order to explain this invention in greater detail, the preferred embodiments of the present invention will be described with reference to the accompanying drawings.

## Embodiment 1

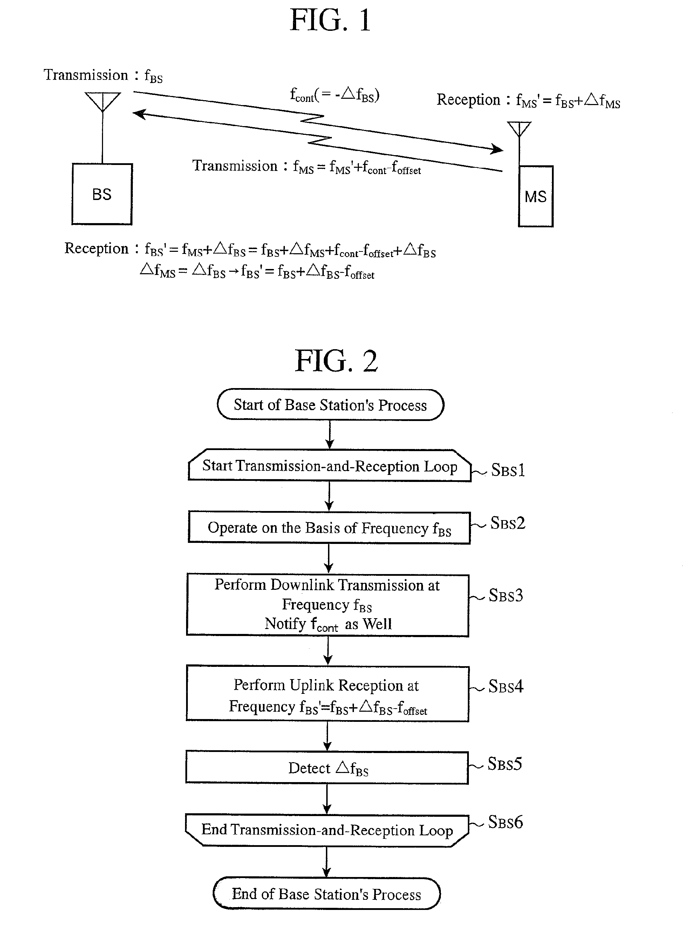

In the following, Embodiment 1 of the present invention will be explained. Fig. 1 is a diagram showing an example of the operation of a cellular phone system using an auto frequency control method in accordance with Embodiment 1 of the present invention. In Fig. 1, the downlink transmission frequency of a base station BS is expressed as $f_{BS}$ and the uplink reception frequency of the base station is expressed as $f_{BS}'$, and the downlink reception frequency of a mobile station MS is expressed as $f_{MS}'$ and the uplink transmission frequency of the mobile station is expressed as $f_{MS}$.

Assume that the base station BS performs transmission and reception operations at a reference frequency which makes its downlink transmission frequency be $f_{BS}$ and also makes its uplink transmission frequency to be ($f_{BS}' = f_{BS} - f_{offset}$).

Assume that the mobile station MS sets TCXO to its reference frequency which makes its downlink reception frequency to be $f_{MS}'$ and also makes its uplink transmission frequency to be ($f_{MS} = f_{MS}' - f_{offset}$), and starts transmission and reception operations.

The explanation will be made by assuming that in this cellular phone system, uplink transmission is carried out using a frequency which is lower than the downlink transmission frequency $f_{BS}$ by $f_{offset}$. The value $f_{offset}$ shows the difference between the fundamental frequency of the base station BS and the fundamental frequency of the mobile station MS in the case of the fundamental frequency of the base station BS > the fundamental frequency of the mobile station MS.

Generally, from the viewpoints of the manufacturing cost etc., the base station BS can be equipped with relatively high precision TCXO as compared with the mobile station MS. Therefore, in accordance with the present invention, assume that the base station BS runs with a sufficient high degree of precision without actively changing its TCXO frequency while always keeping the reference frequency constant, and the mobile station MS performs the TCXO control according to the base station's frequency which is used as the reference and increases or decreases its operating frequency.

The base station BS can perform an AFC process of increasing or decreasing the reference frequency on the basis of the frequency deviation $\Delta f_{BS}$ which is observed during transmission or reception, and so on.

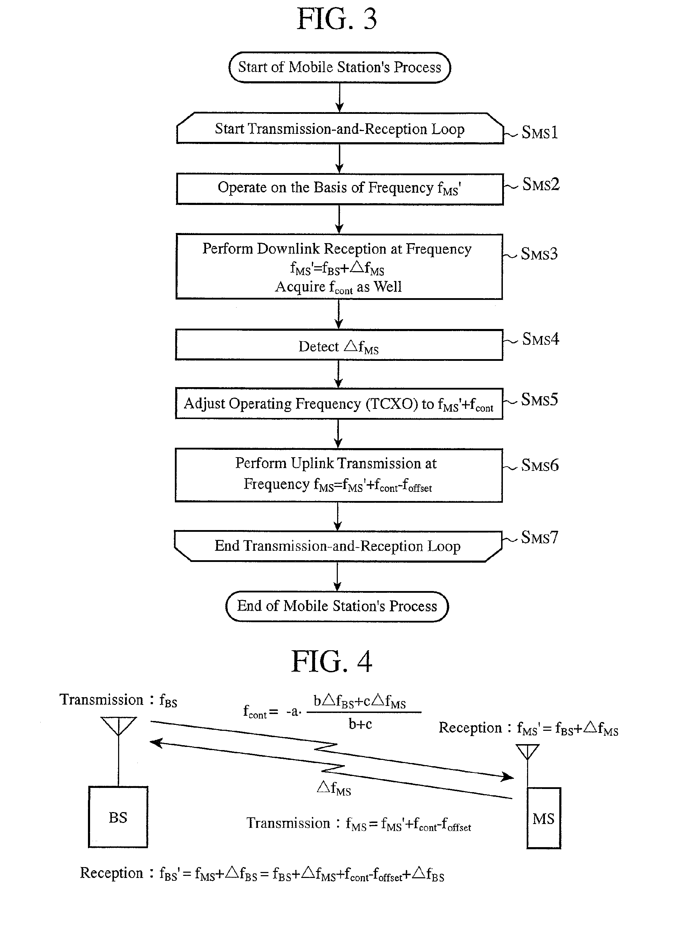

Next, the operation of the cellular phone system will be explained. Fig. 2 is a flow chart showing a process carried out by the base station BS shown in Fig. 1, and Fig. 3 is a flow chart showing a process carried out by the mobile station MS shown in Fig. 1. Hereinafter, the processes of the base station BS and the mobile station MS will be explained with reference to Figs. 1 to 3.

First, the base station BS starts a transmission-and-reception loop (step SBS1), and performs transmission and reception operations at the reference frequency which makes the downlink transmission frequency be $f_{BS}$ and also makes the uplink reception frequency to be ($f_{BS}' = f_{BS} - f_{offset}$) (step SBS2).

The mobile station MS starts the transmission-and-reception loop (step SMS1), and starts transmission and reception operations at the reference frequency which makes the downlink reception frequency be $f_{MS}'$ and also makes the uplink transmission frequency to be ($f_{MS} = f_{MS}' - f_{offset}$) (step SMS2).

Next, when transmitting a downlink signal to the mobile station MS using the downlink transmission frequency $f_{BS}$, the base station BS transmits an instructing amount of frequency increase or decrease $f_{cont}$ in the uplink transmission frequency $f_{MS}$ together with the downlink signal (step SBS3). The value $f_{cont}$ is a value which is based on a frequency deviation $\Delta f_{BS}$ which can be detected from the uplink signal which the base station BS has received, as will be mentioned later, and is, for example, an amount of frequency which is obtained by multiplying $\Delta f_{BS}$ by a minus sign so as to reverse this minus sign.

When the mobile station MS receives the downlink signal, which is transmitted at the downlink transmission frequency $f_{BS}$ from the base station BS, at the reference frequency $f_{MS}'$ ($= f_{BS}$), a frequency deviation $\Delta f_{MS}$ occurs in the downlink signal. The frequency deviation $\Delta f_{MS}$ occurs due to the influence of the Doppler shift caused by the movement of the mobile station MS and a temperature change. Because AFC in accordance with this embodiment operates in such a manner that the downlink reception frequency $f_{MS}'$ of the mobile station MS converges to the downlink transmission frequency $f_{BS}$ of the base station BS, in the mobile station MS the downlink reception frequency is observed as shown by the following equation:

$$f_{MS}' = f_{BS} + \Delta f_{MS} \, .$$

The mobile station MS also acquires the instructing amount of frequency increase or decrease $f_{cont}$ transmitted in step SBS3 (step SMS3).

The mobile station MS then detects the frequency deviation $\Delta f_{MS}$ (step SMS4).

Next, on the basis of $f_{cont}$ acquired in step SMS3, the mobile station MS performs TCXO control so that the reference frequency is increased by $+f_{cont}$ (step SMS5). More specifically, the mobile station sets the reception frequency as shown by the following equation:

$$f_{MS}' = f_{BS} + f_{cont} \text{ (a new setting of } f_{MS}') \, .$$

The mobile station also sets the transmission frequency as shown by the following equation:

$$f_{MS} = f_{MS}' - f_{offset} = f_{BS} + f_{cont} - f_{offset} \, .$$

Next, the mobile station MS performs uplink transmission at the uplink transmission frequency ($f_{MS}' + f_{cont} - f_{offset}$) set in step SMS5 (step SMS6).

When the base station BS receives the uplink signal, which is transmitted from the mobile station MS at the uplink transmission frequency ($f_{MS}' + f_{cont} - f_{offset}$), at the reference frequency ($f_{BS}' = f_{BS} - f_{offset}$), a frequency deviation $\Delta f_{BS}$ occurs in the uplink signal. Therefore, the uplink reception frequency is observed as shown by the following equation:

$$f_{MS}' + f_{cont} - f_{offset} + \Delta f_{BS}$$
$$= (f_{BS} + \Delta f_{MS}) + f_{cont} - f_{offset} + \Delta f_{BS} .$$

Because the relative velocity of the mobile station MS, which is relative to the base station BS, is the same as the relative velocity of the base station BS, which is relative to the mobile station MS, in a case in which in the system, for example, $f_{offset}$ is sufficiently small with respect to the carrier frequency in uplink and downlink communications, it can be assumed that the amount of Doppler shift included in $\Delta f_{BS}$ is the same as that included in $\Delta f_{MS}$.

Furthermore, if it can be assumed that the frequency deviation caused by noise and the temperature change converges to an average of 0 in the long term, and the influence of the frequency deviation can be removed with filtering, temperature compensation, etc., the following equation: ($\Delta f_{BS} = \Delta f_{MS}$) is established.

In addition, when the following equation: ($f_{cont} = -\Delta f_{BS}$) is established, in the base station BS the uplink signal transmitted from the mobile station MS is observed with the uplink reception frequency being given by the following equation (step SBS4):

$$f_{BS}' = f_{BS} + \Delta f_{BS} - f_{offset} .$$

The base station BS detects $\Delta f_{BS}$ from the uplink reception frequency measured in step SBS4 (step SBS5).

Finally, the base station BS and the mobile station MS end their transmission-and-reception loops, and end their respective processes (steps SBS6 and SMS7).

In the system in which the base station BS transmits the instructing amount of frequency increase or decrease $f_{cont}$ which cancels out the frequency deviation $\Delta f_{BS}$ of the uplink signal which the base station BS has received to the mobile station MS, whereas the mobile station MS performs uplink transmission while sequentially adjusting the transmission and reception frequencies to frequencies which are obtained by adding $f_{cont}$ to their original values, the reception signal of the mobile station MS is influenced by the frequency deviation $\Delta f_{MS}$ and the reception signal of the base station BS is influenced by the frequency deviation $\Delta f_{BS}$, and their receiving characteristics degrade, though when it can be assumed that the following equation: $\Delta f_{BS} = \Delta f_{MS}$ is established, the amount of degradation in the reception quality of the mobile station MS and the amount of degradation in the reception quality of the base station BS which are based on the Doppler shifts caused by the movement of the mobile station MS can be distributed so as to become equal to each other.

As mentioned above, in accordance with this Embodiment 1, because the mobile station MS is provided with AFC having a simple structure which complies with only the frequency increase or decrease instruction from the base station BS, when the mobile station and the base station carry out uplink and downlink bidirectional communications, a large amount of degradation can be prevented from occurring in the reception quality of either of the mobile station and the base station and therefore the bidirectional communications can be kept in a good state.

Embodiment 2

In the following, Embodiment 2 of the present invention will be explained. Fig. 4 is a diagram showing an example of the operation of a cellular phone system using an auto frequency control method in accordance with Embodiment 2 of the present invention. Also in Embodiment 2, because the basic configuration of the auto frequency control method is the same as that of Embodiment 1 (Fig. 1), the explanation of the basic configuration will be omitted hereinafter.

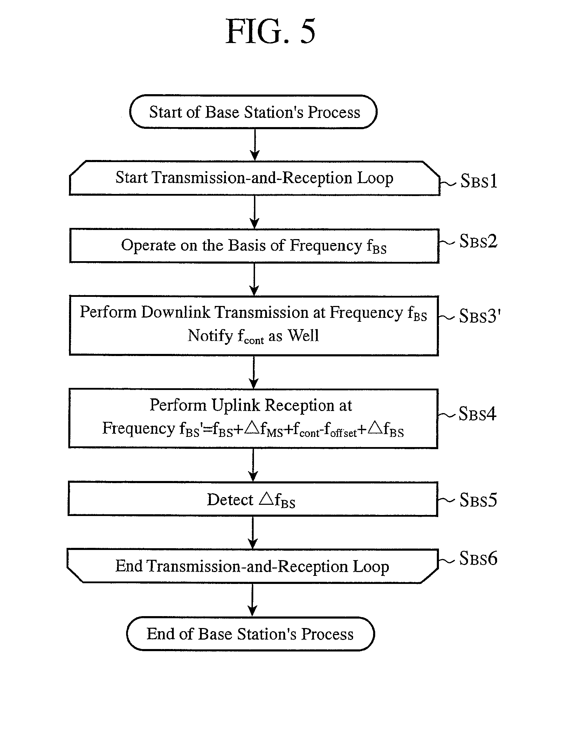

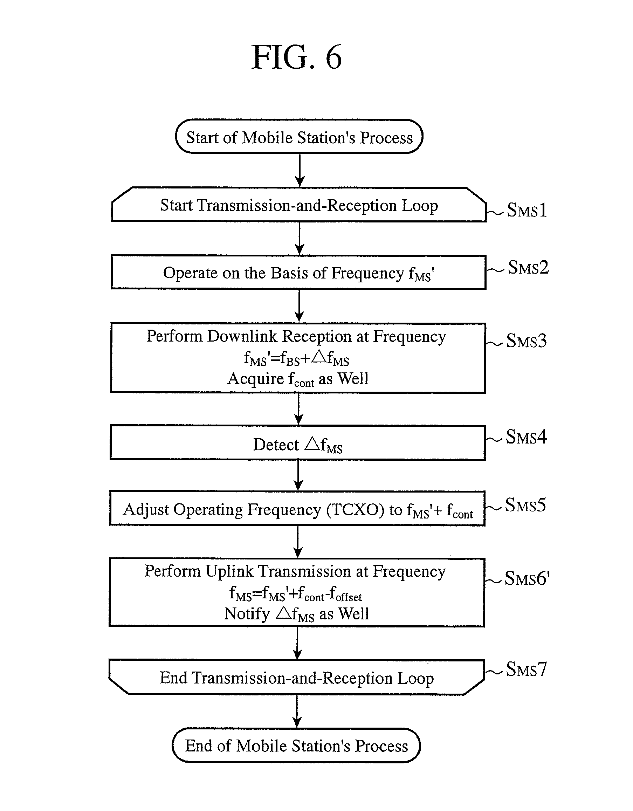

Next, the operation of the cellular phone system will be explained. Fig. 5 is a flow chart showing a process carried out by a base station BS shown in Fig. 4, and Fig. 6 is a flow chart showing a process carried out by a mobile station MS shown in Fig. 4. Hereinafter, the processes carried out by the base station BS and the mobile station MS will b explained with reference to Figs. 4 to 6.

First, the base station BS starts a transmission-and-reception loop (step SBS1), and performs transmission and reception operations at a reference frequency which makes its downlink transmission frequency be $f_{BS}$ and also makes its uplink reception frequency to be ($f_{Bs}' = f_{BS} - f_{offset}$) (step SBS2).

The mobile station MS starts a transmission-and-reception loop (step SMS1), and starts transmission and reception operations at a reference frequency which makes its downlink reception frequency be $f_{MS}'$ and also makes its uplink transmission frequency to be ($f_{MS} = f_{MS}' - f_{offset}$) (step SMS2).

Next, when transmitting a downlink signal to the mobile station MS using the downlink transmission frequency $f_{BS}$, the base station BS transmits an instructing amount of frequency increase or decrease $f_{cont}$ in the uplink transmission frequency $f_{MS}$ together with the downlink signal. The value $f_{cont}$ has a value which is obtained by performing a weighted-sum operation on both a frequency deviation $\Delta f_{BS}$ which can be detected from an uplink signal, as will be mentioned below, which the base station BS has received, and a frequency deviation $\Delta f_{MS}$ which is observed from the downlink signal which the mobile station MS has received using coefficients a, b, and c. For example, $f_{cont}$ has a value given by Equation 1 (step SBS3').

<u>Equation 1</u>

$$f_{cont} = -a \cdot \frac{b\Delta f_{BS} + c\Delta f_{MS}}{b + c}$$

Because when the relative value of b with respect to c is increased in Equation 1, it can be considered that greater importance is placed on $\Delta f_{BS}$ observed by the base station BS, whereas when the relative value of c with respect to b is increased, it can be considered that greater importance is placed on $\Delta f_{MS}$ observed by the mobile station MS, the weighting with the coefficients can be adaptively changed by taking into consideration the bit error rate of each of the uplink and downlink communications, and so on so that greater importance is placed on one of the measured values with a higher degree of reliability.

Although the coefficient a is a parameter which determines the controlled variable and responsibility of AFC, because AFC diverges when the controlled variable is increased, it is desirable to set the coefficient a to a right small value which can make the mobile station and the base station operate with stability.

When the mobile station MS receives the downlink signal, which is transmitted at the downlink transmission frequency $f_{BS}$ from the base station BS, at the reference frequency ($f_{MS}' = f_{BS}$), a frequency deviation $\Delta f_{MS}$ occurs in the downlink signal. The frequency deviation $\Delta f_{MS}$ occurs due to the influence of the Doppler shift caused by the movement of the mobile station MS and a temperature change. Because AFC in accordance with this embodiment operates in such a manner that the downlink reception frequency $f_{MS}'$ of the mobile station MS converges to the downlink transmission frequency $f_{BS}$ of the base station BS, in the mobile station MS the downlink reception frequency is observed as shown by the following equation:

$$f_{MS}' = f_{BS} + \Delta f_{MS} .$$

The mobile station MS also acquires the instructing amount of frequency increase or decrease $f_{cont}$ transmitted in step SBS3 (step SMS3).

The mobile station MS then detects the frequency deviation $\Delta f_{MS}$ (step SMS4).

Next, on the basis of $f_{cont}$ acquired in step SMS3, the mobile station MS performs TCXO control so that the reference frequency is increased by $+f_{cont}$ (step SMS5).

More specifically, the mobile station sets the reception frequency as shown by the following equation:

$$f_{MS}' = f_{BS} + f_{cont} \ (\text{a new setting of } f_{MS}') .$$

The mobile station also sets the transmission frequency as shown by the following equation:

$$f_{MS} = f_{MS}' - f_{offset} = f_{BS} + f_{cont} - f_{offset} .$$

When the mobile station MS performs uplink transmission at the uplink transmission frequency ($f_{MS}' + f_{cont} - f_{offset}$) set in step SMS5, the mobile station transmits the frequency deviation $\Delta f_{MS}$ detected to the base station BS as well (step SMS6').

When the base station BS receives the uplink signal, which is transmitted from the mobile station MS at the uplink transmission frequency ($f_{MS}' + f_{cont} - f_{offset}$), at the reference frequency ($f_{BS}' = f_{BS} - f_{offset}$), a frequency deviation $\Delta f_{BS}$ occurs in the uplink signal. Therefore, the uplink reception frequency is observed as shown by the following equation (step SBS4):

$$f_{MS}' + f_{cont} - f_{offset} + \Delta f_{BS}$$
$$= (f_{BS} + \Delta f_{MS}) + f_{cont} - f_{offset} + \Delta f_{BS} .$$

As in the case of Embodiment 1, because the relative velocity of the mobile station MS, which is relative to the base station BS, is the same as the relative velocity of the base station BS, which is relative to the mobile station MS, in a case in which in the system, for example, $f_{offset}$ is sufficiently small with respect to the carrier frequency in uplink and downlink communications, it can be assumed that the amount of Doppler shift included in $\Delta f_{BS}$ is the same as that included in $\Delta f_{MS}$.

Furthermore, if it can be assumed that the frequency deviation caused by noise and the temperature change converges to an average of 0 in the long term, and the influence of the frequency deviation can be removed with filtering, temperature compensation, etc., the following equation: ($\Delta f_{BS} = \Delta f_{MS}$) is established. In addition, when the coefficient a = 1 in Equation 1, the following equation: ($f_{cont} = -\Delta f_{BS} = -\Delta f_{MS}$) is established. Therefore, in the base station BS the uplink signal transmitted from the mobile station MS is observed with the uplink reception frequency being given by the following equation:

$$f_{BS}' = f_{BS} + \Delta f_{BS} - f_{offset} .$$

The base station BS detects $\Delta f_{BS}$ from the uplink reception frequency measured in step SBS4 (step SBS5).

Finally, the base station BS and the mobile station MS end their transmission-and-reception loops, and end their respective processes (steps SBS6 and SMS7).

In the system in which the base station BS transmits the instructing amount of frequency increase or decrease $f_{cont}$ which cancels out the frequency deviation $\Delta f_{BS}$ of the uplink signal which the base station BS has received to the mobile station MS, whereas the mobile station MS performs uplink transmission while sequentially adjusting the transmission and reception frequencies to frequencies which are obtained by adding $f_{cont}$ to their original values, the reception signal of the mobile station MS is influenced by the frequency deviation $\Delta f_{MS}$ and the reception signal of the base station BS is influenced by the frequency deviation $\Delta f_{BS}$, and their receiving characteristics degrade, though when it can be assumed that the following equation: $\Delta f_{BS} = \Delta f_{MS}$ is established, the amount of degradation in the reception quality of the mobile station MS and the amount of degradation in the reception quality of the base station BS which are based on the Doppler shifts caused by the movement of mobile station MS can be distributed so as to become equal to each other.

As mentioned above, in accordance with this Embodiment 2, because the mobile station MS is provided with AFC having a simple structure which complies with only the frequency increase or decrease instruction from the base station BS, when the mobile station and the base station carry out uplink and downlink bidirectional communications, a large amount of degradation can be prevented from occurring in the reception quality of either of the mobile station and the base station and therefore the bidirectional communications can be kept in a good state.

Particularly, because $\Delta f_{BS}$ and $\Delta f_{MS}$ are measured on the basis of reception signals influenced by fading and so on in uplink and downlink communications, respectively, variations occur in the instantaneous measured values of the frequency deviations, though by performing a weighted-sum operation on $\Delta f_{BS}$ and $\Delta f_{MS}$ to determine the instructing amount of frequency increase or decrease $f_{cont}$, AFC can be performed on the basis of the frequency deviation measured values which are more stable.

Embodiment 3

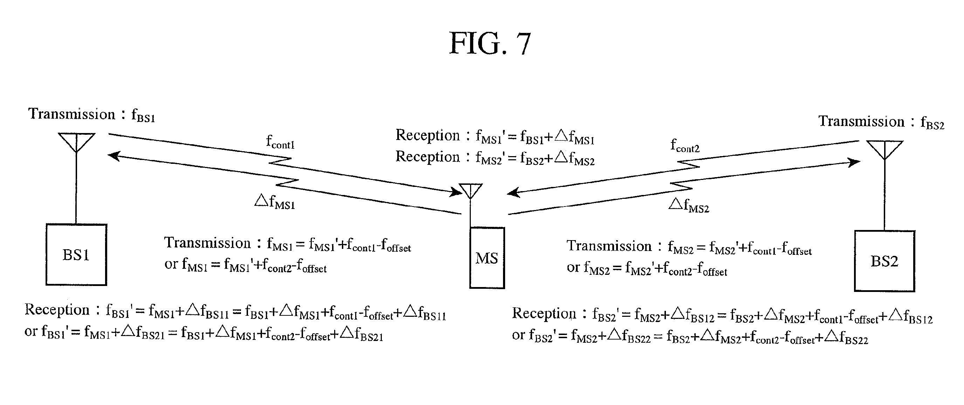

In the following, Embodiment 3 of the present invention will be explained. Fig. 7 is a diagram showing an example of the operation of a cellular phone system using an auto frequency control method in accordance with Embodiment 3 of the present invention. In Embodiment 3, an example of an operation of a mobile station MS communicating with a plurality of base stations BS1, BS2, ..., and BSi (i is an arbitrary integer) simultaneously when, for example, carrying out a software handover will be shown.

Although in Embodiment 3 the example is shown assuming that the mobile station MS communicates with two base stations BS1 and BS2 simultaneously, in the auto frequency control method in accordance with the present invention, the number of base stations with which the mobile station MS communicates simultaneously is not limited to two.

Furthermore, although this explanation will be made assuming that the mobile station MS communicates with each of the plurality of base stations BSi using a different frequency and different transmission power, the mobile station MS can alternatively carry out communications with the plurality of base stations using an identical frequency or identical transmission power.

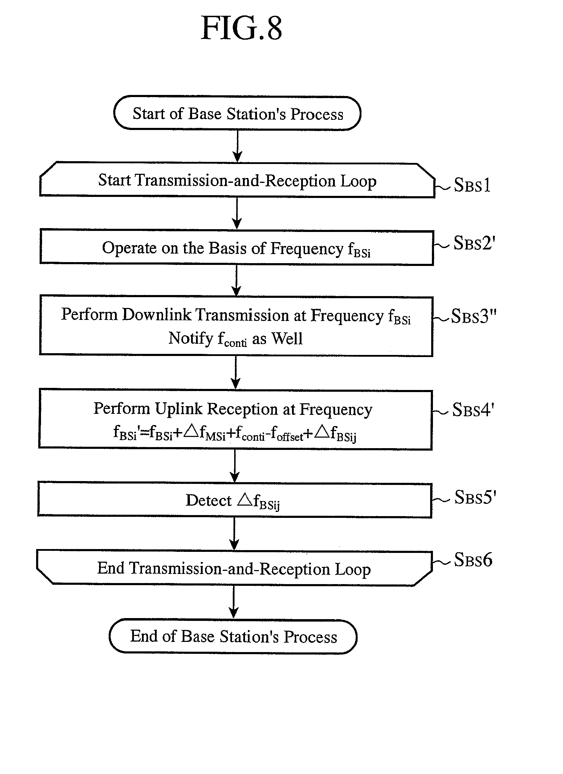

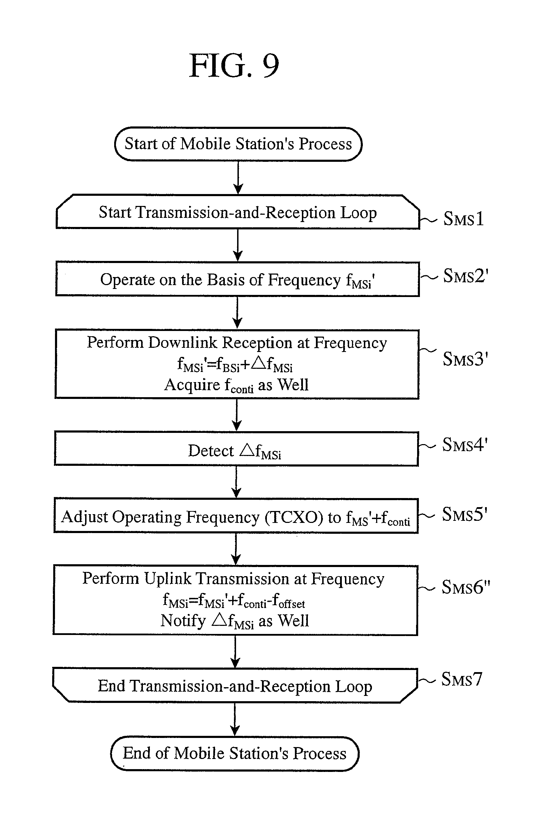

Next, the operation of the cellular phone system will be explained. Fig. 8 is a flow chart showing a process carried out by a base station BS shown in Fig. 7, and Fig. 9 is a flow chart showing a process carried out by a mobile station MS shown in Fig. 7. Hereinafter, the processes carried out by the base station BS and the mobile station MS will be explained in time sequence with reference to Figs. 1 to 3.

First, the base station BSi starts a transmission-and-reception loop (step SBS1), and performs transmission and reception operations at a reference frequency which makes its downlink transmission frequency be $f_{BSi}$ and also makes its uplink reception frequency to be ($f_{BSi}$ - $f_{offset}$) (step SBS2').

The mobile station MS starts a transmission-and-reception loop (step SMS1), and starts transmission and reception operations at a reference frequency which makes its downlink reception frequency be $f_{Msi}$' and also makes its uplink transmission frequency to be ($f_{MSi}$ = $f_{MSi}$' - $f_{offset}$) (step SMS2').

Next, when the base station BS1 transmits a downlink signal to the mobile station MS using a downlink transmission frequency $f_{BS1}$, the base station transmits an instructing amount of frequency increase or decrease $f_{cont1}$ in the uplink transmission frequency $f_{MS1}$ together with the downlink signal. Furthermore, when the base station BS2 transmits a downlink signal to the mobile station MS using a downlink transmission frequency $f_{BS2}$, the base station transmits an instructing amount of frequency increase or decrease $f_{cont2}$ in the uplink transmission frequency $f_{MS2}$ together with the downlink signal (step SBS3").

When the mobile station MS receives the downlink signal, which is transmitted at the downlink transmission frequency $f_{BS1}$ from the base station BS1, at the reference frequency ($f_{MS1}$' = $f_{BS1}$), a frequency deviation $\Delta f_{MS1}$ occurs in the downlink signal. The frequency deviation $\Delta f_{MS1}$ occurs due to the influence of the Doppler shift caused by the movement of the mobile station MS and a temperature change. Because AFC in accordance with this embodiment operates in such a manner that the downlink reception frequency $f_{MS}$' of the mobile station MS converges to the downlink transmission frequency $f_{BS}$ of each base station BS, in the mobile station MS the downlink reception frequency is observed as shown by the following equation:

$$f_{MS1}' = f_{BS1} + \Delta f_{MS1} \ .$$

Similarly, when the mobile station MS receives the downlink signal, which is transmitted at the downlink transmission frequency $f_{BS2}$ from the base station BS2, at the reference frequency ($f_{MS2}$'= $f_{BS2}$), a frequency deviation $\Delta f_{MS2}$ occurs in the downlink signal. In the mobile station MS, the downlink reception frequency is observed as shown by the following equation:

$$f_{MS2}' = f_{BS2} + \Delta f_{MS2} \ .$$

The mobile station MS also acquires the instructing amounts of frequency increase or decrease $f_{cont1}$ and $f_{cont2}$ transmitted in step SBS3" (step SMS3').

The mobile station MS then detects the frequency deviations $\Delta f_{MS1}$ and $\Delta f_{MS2}$ (step SMS4').

The instructing amount of frequency increase or decrease $f_{cont1}$ which the base station BS1 transmits to the mobile station MS can have a value shown by, for example, Equation 2 or Equation 3.

Equation 2

$$f_{cont1} = -a \cdot \frac{b\Delta f_{BS11} + c\Delta f_{MS1}}{b + c}$$

Equation 3

$$f_{cont1} = -a \cdot \frac{b\Delta f_{BS21} + c\Delta f_{MS1}}{b + c}$$

Similarly, the instructing amount of frequency increase or decrease $f_{cont2}$ which the base station BS2 transmits to the mobile station MS can have a value shown by, for example, Equation 4 or Equation 5.

Equation 4

$$f_{cont2} = -a \cdot \frac{b\Delta f_{BS12} + c\Delta f_{MS2}}{b+c}$$

Equation 5

$$f_{cont2} = -a \cdot \frac{b\Delta f_{BS22} + c\Delta f_{MS2}}{b+c}$$

In Equations 2 to 5, $\Delta f_{BSij}$ shows a frequency deviation which occurs, due to noise, a temperature change, a Doppler shift, and so on, in an uplink signal which the mobile station MS has transmitted at a frequency $f_{Msi}$ when received by the base station BSj (j is an arbitrary integer) (refer to below-mentioned step SBS4'), and can be detected by the base station BSj (refer to below-mentioned step SBS5') from the amount of phase rotation per unit time of a known pilot symbol which is transmitted by the mobile station MS in the uplink direction.

Furthermore, in Equations 2 to 5, a weighted-sum operation is performed on both the frequency deviation $\Delta f_{BSij}$ which is observed from the uplink signal which the base station BSj has received, and the frequency deviation $\Delta f_{MSi}$ which is observed from the downlink signal which the mobile station MS has received using coefficients a, b, and c.

While the mobile station MS receives the different instructing amounts of frequency increase or decrease $f_{conti}$ and $f_{cont2}$ from the two base stations BS1 and BS2, respectively, the mobile station increases or decreases its transmission and reception frequencies according to one $f_{conti}$ of the instructing amounts of frequency increase or decrease, depending upon the importance of communications with each base station (step SMS5').

As an index used for judgment of the importance of communications with each base station, for example, one of the following indexes is used.

A combination of two or more of these indexes (1) to (10) can be used to judge the importance of communications with each base station.

    (1) The signal-to-power ratio of the downlink signal in the mobile station for each base station;
    (2) The receive error rate of the downlink signal in the mobile station for each base station;
    (3) The distance between the mobile station and each base station;
    (4) Whether the uplink transmission power of the mobile station for each base station is large or small;
    (5) The relative velocity between the mobile station and each base station;
    (6) Whether the Doppler shift amount of the downlink signal in the mobile station for each base station is large or small;
    (7) Whether the communication duration between the mobile station and each base station is large or small;
    (8) Whether the frequency deviation of the downlink signal in the mobile station for each base station is large or small;
    (9) Whether the reception quality of the downlink signal or the trackability of the reception power for a downlink transmission power control command which the mobile station transmits to each base station is good or not; and
    (10) Whether the trackability of a phase angle between a downlink common CH (channel) and a dedicated CH, which is transmitted from each base station in response to an FBI command for specifying the phase angle between the downlink common CH and the dedicated CH to a base station (refer to Chapter 5 of 3GPP TS 25.211 V5.3.0 and Chapter 7 of 3GPP TS 25.214 V5.3.0), which is transmitted from the mobile station, is good or not.

In the following, examples in which the indexes (1) to (10) are used, respectively, as the index used for judgment of the importance of communications with each base station will be explained.

First, an example in which the index (1) is used will be explained. According to the instructing amount of frequency increase or decrease $f_{conti}$ from the base station BSi having a certain signal-to-power ratio or more which results in judgment that the reception quality is sufficient to be reliable, the mobile station MS increases or decreases its transmission and reception frequencies. When two or more base stations having the above-mentioned certain signal-to-power ratio or more exist, the instructing amount of frequency increase or decrease $f_{conti}$ from a base station BSi with the highest signal-to-power ratio can be used by assuming that the instructing amount of frequency increase or decrease $f_{conti}$ has a high degree of reliability.

As an alternative, in order to improve the quality of communications with a base station BSi having a relatively-low signal-to-power ratio compared with those of the other base stations, the instructing amount of frequency increase or decrease $f_{conti}$ from the base station BSi can be used. How to select the instructing amount of frequency increase or decrease $f_{conti}$ which is used for the frequency increase or decrease is arbitrarily determined according to the intended use.

Next, an example in which the index (2) is used will be explained. According to the instructing amount of frequency increase or decrease $f_{conti}$ from a base station BSi having a certain receive error rate or more which results in judgment that the reception quality is sufficient to be reliable, the mobile station MS increases or decreases its transmission and reception frequencies. When two or more base stations having the above-mentioned certain receive error rate or more exist, the instructing amount of frequency increase or decrease $f_{conti}$ from a base station BSi with the lowest receive error rate can be used by assuming that the instructing amount of frequency increase or decrease $f_{conti}$ has a high degree of reliability.

As an alternative, in order to improve the quality of communications with a base station BSi having a relatively-high receive error rate compared with those of the other base stations, the instructing amount of frequency increase or decrease $f_{conti}$ from the base station BSi can be used. How to select the instructing amount of frequency increase or decrease $f_{conti}$ which is used for the frequency increase or decrease is arbitrarily determined according to the intended use.

Next, an example in which the index (3) is used will be explained. According to the instructing amount of frequency increase or decrease $f_{conti}$ from a base station BSi having a certain communication range or less which results in judgment that the reception quality is sufficient to be reliable, the mobile station MS increases or decreases its transmission and reception frequencies. When two or more base stations having the above-mentioned certain communication range or less exist, the instructing amount of frequency increase or decrease $f_{conti}$ from a base station BSi with the shortest communication range can be used by assuming that the instructing amount of frequency increase or decrease $f_{conti}$ has a high degree of reliability.

As an alternative, in order to improve the quality of communications with a base station BSi having a relatively-long communication range compared with those of the other base stations, the instructing amount of frequency increase or decrease $f_{conti}$ from the base station BSi can be used. How to select the instructing amount of frequency increase or decrease $f_{conti}$ which is used for the frequency increase or decrease is arbitrarily determined according to the intended use.

Next, an example in which the index (4) is used will be explained. According to the instructing amount of frequency increase or decrease $f_{conti}$ from a base station BSi having certain uplink transmission power or less which results in judgment that the reception quality is sufficient to be reliable, the mobile station MS increases or decreases its transmission and reception frequencies. When two or more base stations having the above-mentioned certain uplink transmission power or less exist, the instructing amount of frequency increase or decrease $f_{conti}$ from a base station BSi with the lowest uplink transmission power can be used by assuming that the instructing amount of frequency increase or decrease $f_{conti}$ has a high degree of reliability.

As an alternative, in order to improve the quality of communications with a base station BSi having relatively-high uplink transmission power compared with those of the other base stations, the instructing amount of frequency increase or decrease $f_{conti}$ from the base station BSi can be used. How to select the instructing amount of frequency increase or decrease $f_{conti}$ which is used for the frequency increase or decrease is arbitrarily determined according to the intended use.

Next, an example in which the index (5) is used will be explained. According to the instructing amount of frequency increase or decrease $f_{conti}$ from a base station BSi having a certain relative velocity or less which results in judgment that the reception quality is sufficient to be reliable, the mobile station MS increases or decreases its transmission and reception frequencies. When two or more base stations having the above-mentioned certain relative velocity or less exist, the instructing amount of frequency increase or decrease $f_{conti}$ from a base station BSi with the lowest relative velocity can be used by assuming that the instructing amount of frequency increase or decrease $f_{conti}$ has a high degree of reliability.

As an alternative, in order to improve the quality of communications with a base station BSi having a relatively-high relative velocity compared with those of the other base stations, the instructing amount of frequency increase or decrease $f_{conti}$ from the base station BSi can be used. How to select the instructing amount of frequency increase or decrease $f_{conti}$ which is used for the frequency increase or decrease is arbitrarily determined according to the intended use.

Next, an example in which the index (6) is used will be explained. According to the instructing amount of frequency increase or decrease $f_{conti}$ from a base station BSi having a certain Doppler shift amount or less which results in judgment that the reception quality is sufficient to be reliable, the mobile station MS increases or decreases its transmission and reception frequencies. When two or more base stations having the above-mentioned certain Doppler shift amount or less exist, the instructing amount of frequency increase or decrease $f_{conti}$ from a base station BSi with the smallest Doppler shift amount can be used by assuming that the instructing amount of frequency increase or decrease $f_{conti}$ has a high degree of reliability.

As an alternative, in order to improve the quality of communications with a base station BSi having a relatively-large Doppler shift amount compared with those of the other base stations, the instructing amount of frequency increase or decrease $f_{conti}$ from the base station BSi can be used. How to select the instructing amount of frequency increase or decrease $f_{conti}$ which is used for the frequency increase or decrease is arbitrarily determined according to the intended use.

Next, an example in which the index (7) is used will be explained. According to the instructing amount of frequency increase or decrease $f_{conti}$ from a base station BSi having a certain communication duration or more which results in judgment that the reception quality is sufficient to be reliable, the mobile station MS increases or decreases its transmission and reception frequencies. When two or more base stations having the above-mentioned certain communication duration or more exist, the instructing amount of frequency increase or decrease $f_{conti}$ from a base station BSi with the longest communication duration can be used by assuming that the instructing amount of frequency increase or decrease $f_{conti}$ has a high degree of reliability.

As an alternative, in order to improve the quality of communications with a base station BSi having a relatively-short communication duration compared with those of the other base stations, the instructing amount of frequency increase or decrease $f_{conti}$ from the base station BSi can be used. How to select the instructing amount of frequency increase or decrease $f_{conti}$ which is used for the frequency increase or decrease is arbitrarily determined according to the intended use.

Next, an example in which the index (8) is used will be explained. According to the instructing amount of frequency increase or decrease $f_{conti}$ from a base station BSi having a certain frequency deviation or less which results in judgment that the reception quality is sufficient to be reliable, the mobile station MS increases or decreases its transmission and reception frequencies.

When two or more base stations having the above-mentioned certain frequency deviation or less exist, the instructing amount of frequency increase or decrease $f_{conti}$ from a base station BSi with the smallest frequency deviation can be used by assuming that the instructing amount of frequency increase or decrease $f_{conti}$ has a high degree of reliability.

As an alternative, in order to improve the quality of communications with a base station BSi having a relatively-large frequency deviation compared with those of the other base stations, the instructing amount of frequency increase or decrease $f_{conti}$ from the base station BSi can be used. How to select the instructing amount of frequency increase or decrease $f_{conti}$ which is used for the frequency increase or decrease is arbitrarily determined according to the intended use.

Next, an example in which the index (9) is used will be explained. According to the instructing amount of frequency increase or decrease $f_{conti}$ from a base station BSi having a certain accuracy degree of trackability to the downlink transmission power control or more which results in judgment that the reception quality is sufficient to be reliable, the mobile station MS increases or decreases its transmission and reception frequencies.

When two or more base stations having the above-mentioned certain accuracy degree of trackability to the downlink transmission power control or more exist, the instructing amount of frequency increase or decrease $f_{conti}$ from a base station BSi with the highest degree of trackability to the downlink transmission power control can be used by assuming that the instructing amount of frequency increase or decrease $f_{conti}$ has a high degree of reliability.

As an alternative, in order to improve the quality of communications with a base station BSi having a relatively-low degree of trackability to the downlink transmission power control, compared with those of the other base stations, the instructing amount of frequency increase or decrease $f_{conti}$ from the base station BSi can be used. How to select the instructing amount of frequency increase or decrease $f_{conti}$ which is used for the frequency increase or decrease is arbitrarily determined according to the intended use.

Finally, an example in which the index (10) is used will be explained. According to the instructing amount of frequency increase or decrease $f_{conti}$ from the base station BSi having a certain accuracy degree of trackability of the phase angle between the downlink common CH and the dedicated CH for the FBI command or more which results in judgment that the reception quality is sufficient to be reliable, the mobile station MS increases or decreases its transmission and reception frequencies.

When two or more base stations having the above-mentioned certain accuracy degree of trackability of the phase angle between the downlink common CH and the dedicated CH for the FBI command or more exist, the instructing amount of frequency increase or decrease $f_{conti}$ from a base station BSi with the highest degree of trackability to the downlink transmission power control can be used by assuming that the instructing amount of frequency increase or decrease $f_{conti}$ has a high degree of reliability.

As an alternative, in order to improve the quality of communications with a base station BSi having a relatively-low degree of trackability of the phase angle between the downlink common CH and the dedicated CH for the FBI command, compared with those of the other base stations, the instructing amount of frequency increase or decrease $f_{conti}$ from the base station BSi can be used. How to select the instructing amount of frequency increase or decrease $f_{conti}$ which is used for the frequency increase or decrease is arbitrarily determined according to the intended use.

An explanation will be returned to the processes carried out by the base station BSi and the mobile station MS again. The mobile station MS performs uplink transmission to the base station BSi at a frequency ($f_{MSi}=f_{MSi}' + f_{conti} - f_{offset}$) which is newly increased or decreased. The increase or decrease in the frequency follows the instructing amount of frequency increase or decrease $f_{conti}$ which is selected, in step SMS5', according to the importance of communications with each base station.

As an example, the uplink transmission frequency for the base station BS1 is given as follows:

$$f_{MS1} = f_{MS1}' + f_{cont1} - f_{offset}$$

or

$$f_{MS1} = f_{MS1}' + f_{cont2} - f_{offset} \ .$$

The uplink transmission frequency for the base station BS2 is given as follows:

$$f_{MS2} = f_{MS2}' + f_{cont1} - f_{offset}$$

or

$$f_{MS2} = f_{MS2}' + f_{cont2} - f_{offset} \ .$$

In this case, the mobile station MS transmits the frequency deviation $\Delta f_{MSi}$ detected from the downlink signal received thereby to each base station BSi as well (step SMS6").

When the base station BSi then receives an uplink signal, which is transmitted from the mobile station MS at the uplink transmission frequency ($f_{MSi} = f_{MSi}' + f_{conti} - f_{offset}$), at a reference frequency ($f_{BSi}' = f_{BSi} - f_{offset}$), a frequency deviation $\Delta f_{BSij}$ occurs in the uplink signal. Therefore, in the base station BSi, the uplink reception frequency is observed as shown by the following equation (step SBS4'):

$$f_{BSi}' = f_{MSi}' + f_{conti} - f_{offset} + \Delta f_{BSij}$$
$$= (f_{BSi} + \Delta f_{MSi}) + f_{conti} - f_{offset} + \Delta f_{BSij} \ .$$

As an example, the uplink reception frequency of the base station BS1 is given as follows:

$$f_{BS1}' = f_{BS1} + \Delta f_{MS1} + f_{cont1} - f_{offset} + \Delta f_{BS11}$$

or

$$f_{BS1}' = f_{BS1} + \Delta f_{MS1} + f_{cont2} - f_{offset} + \Delta f_{BS21} \ .$$

The uplink reception frequency of the base station BS2 is given as follows:

$$f_{BS2}' = f_{BS2} + \Delta f_{MS2} + f_{cont1} - f_{offset} + \Delta f_{BS12}$$

or

$$f_{BS2}' = f_{BS2} + \Delta f_{MS2} + f_{cont2} - f_{offset} + \Delta f_{BS22} \ .$$

The base station BSi detects $\Delta f_{BSij}$ from the uplink reception frequency measured in step SBS4 (step SBS5').

Finally, the base station BS and the mobile station MS end their transmission-and-reception loops, and ends their respective processes (steps SBS6 and SMS7).

As mentioned above, in accordance with this Embodiment 3, even in a case in which the mobile station which is communicating with two or more base stations simultaneously receives an instruction for specifying a different frequency increase or decrease from each base station, the mobile station can maintain a good communicating state with a base station with which the mobile station is carrying out communications of greater importance by increasing or decreasing its frequencies according to the instruction from the base station of greater importance in communications.

Furthermore, in a case in which it is judged that the quality of communications with the base station of greater importance is sufficiently good, the mobile station can maintain a good diversity communicating state with the two or more base stations by following a frequency increase or decrease instruction from a base station of relatively-lower importance.

Industrial Applicability

As mentioned above, the auto frequency control method in accordance with the present invention is used for a cellular phone system and so on, and is suitable for implementation of automatic frequency control which cannot be easily influenced by any Doppler shift.

**Claims**

1.  An auto frequency control method comprising:

    - a first step of a base station detecting a frequency deviation of an uplink signal transmitted from a mobile station;
    - a second step of the base station transmitting an instructing amount of increase or decrease in a transmission frequency of the uplink signal to the mobile station on a basis of the frequency deviation of the uplink signal; and
    - a third step of the mobile station shifting the transmission frequency of the uplink signal according to the instructing amount of increase or decrease transmitted from the base station.

2.  The auto frequency control method according to claim 1,
    **characterized in that** the method includes a fourth step of the mobile station transmitting a frequency deviation of a downlink signal from the base station to the base station, and, in the second step, the base station transmits the instructing amount of increase or decrease to the mobile station on a basis of the frequency deviation of the uplink signal and the frequency deviation of the downlink signal.

3.  The auto frequency control method according to claim 1,
    **characterized in that** the method includes a fifth step of the mobile station detecting the frequency deviation of the downlink signal.

4.  The auto frequency control method according to claim 2,
    **characterized in that** in the second step, a plurality of the base stations transmit their respective instructing amounts of increase or decrease to the mobile station, and, in the third step, the mobile station selects the instructing amount of increase or decrease on a basis of importance of communications between each of the base stations and the mobile station, and shifts the transmission frequency of the uplink signal according to the selected instructing amount of increase or decrease.

5.  The auto frequency control method according to claim 4,
    **characterized in that** as an index used for judgment of the importance of the communications between each of the base stations and the mobile station, a signal-to-power ratio of the downlink signal of the mobile station for each of the base stations is used.

6.  The auto frequency control method according to claim 4,
    **characterized in that** as an index used for judgment of the importance of the communications between each of the base stations and the mobile station, a receive error rate of the downlink signal of the mobile station for each of the base stations is used.

7.  The auto frequency control method according to claim 4,
    **characterized in that** as an index used for judgment of the importance of the communications between each of the base stations and the mobile station, a distance between each of the base stations and the mobile station is used.

8.  The auto frequency control method according to claim 4,
    **characterized in that** as an index used for judgment of the importance of the communications between each of the base stations and the mobile station, uplink transmission power of the mobile station for each of the base stations is used.

9. The auto frequency control method according to claim 4,
**characterized in that** as an index used for judgment of the importance of the communications between each of the base stations and the mobile station, a relative velocity between each of the base stations and the mobile station is used.

10. The auto frequency control method according to claim 4,
**characterized in that** as an index used for judgment of the importance of the communications between each of the base stations and the mobile station, a Doppler shift amount of the downlink signal of the mobile station for each of the base stations is used.

11. The auto frequency control method according to claim 4,
**characterized in that** as an index used for judgment of the importance of the communications between each of the base stations and the mobile station, a communication duration between each of the base stations and the mobile station is used.

12. The auto frequency control method according to claim 4,
**characterized in that** as an index used for judgment of the importance of the communications between each of the base stations and the mobile station, a frequency deviation of the downlink signal of the mobile station for each of the base stations is used.

13. The auto frequency control method according to claim 4,
**characterized in that** as an index used for judgment of the importance of the communications between each of the base stations and the mobile station, trackability of reception quality of the downlink signal for a downlink transmission power control command which the mobile station transmits to each of the base stations is used.

14. The auto frequency control method according to claim 4,
**characterized in that** as an index used for judgment of the importance of the communications between each of the base stations and the mobile station, trackability of reception power of the downlink signal for a downlink transmission power control command which the mobile station transmits to each of the base stations is used.

15. The auto frequency control method according to claim 4,
**characterized in that** as an index used for judgment of the importance of the communications between each of the base stations and the mobile station, trackability of a phase angle between a downlink common channel and a dedicated channel, which is transmitted from each of the base stations, for a command, which the mobile station transmits to each of the base stations, for specifying the phase angle between the downlink common channel and the dedicated channel is used.

# FIG. 1

Transmission : $f_{BS}$

$f_{cont}(= -\triangle f_{BS})$     Reception : $f_{MS}' = f_{BS} + \triangle f_{MS}$

Transmission : $f_{MS} = f_{MS}' + f_{cont} - f_{offset}$

BS                  MS

Reception : $f_{BS}' = f_{MS} + \triangle f_{BS} = f_{BS} + \triangle f_{MS} + f_{cont} - f_{offset} + \triangle f_{BS}$

$\triangle f_{MS} = \triangle f_{BS} \rightarrow f_{BS}' = f_{BS} + \triangle f_{BS} - f_{offset}$

# FIG. 2

```
        ( Start of Base Station's Process )
                      │
                      ▼
   ( Start Transmission-and-Reception Loop )～ SBS1
                      │
                      ▼
   [ Operate on the Basis of Frequency fBS ]～ SBS2
                      │
                      ▼
   ┌─────────────────────────────────────┐
   │   Perform Downlink Transmission at   │
   │          Frequency fBS               │～ SBS3
   │        Notify fcont as Well          │
   └─────────────────────────────────────┘
                      │
                      ▼
   ┌─────────────────────────────────────┐
   │    Perform Uplink Reception at       │～ SBS4
   │ Frequency fBS'=fBS+△fBS-foffset      │
   └─────────────────────────────────────┘
                      │
                      ▼
   [          Detect △fBS                ]～ SBS5
                      │
                      ▼
   ( End Transmission-and-Reception Loop )～ SBS6
                      │
                      ▼
        ( End of Base Station's Process )
```

Start Transmission-and-Reception Loop ～ SBS1

Operate on the Basis of Frequency $f_{BS}$ ～ SBS2

Perform Downlink Transmission at
Frequency $f_{BS}$
Notify $f_{cont}$ as Well ～ SBS3

Perform Uplink Reception at
Frequency $f_{BS}' = f_{BS} + \triangle f_{BS} - f_{offset}$ ～ SBS4

Detect $\triangle f_{BS}$ ～ SBS5

End Transmission-and-Reception Loop ～ SBS6

15

# FIG. 3

$$\text{Start of Mobile Station's Process}$$

Start Transmission-and-Reception Loop — $S_{MS}1$

Operate on the Basis of Frequency $f_{MS}'$ — $S_{MS}2$

Perform Downlink Reception at Frequency
$f_{MS}'=f_{BS}+\triangle f_{MS}$
Acquire $f_{cont}$ as Well — $S_{MS}3$

Detect $\triangle f_{MS}$ — $S_{MS}4$

Adjust Operating Frequency (TCXO) to $f_{MS}'+f_{cont}$ — $S_{MS}5$

Perform Uplink Transmission at
Frequency $f_{MS}=f_{MS}'+f_{cont}-f_{offset}$ — $S_{MS}6$

End Transmission-and-Reception Loop — $S_{MS}7$

$$\text{End of Mobile Station's Process}$$

# FIG. 4

Transmission : $f_{BS}$

$$f_{cont} = -a \cdot \frac{b\triangle f_{BS}+c\triangle f_{MS}}{b+c}$$

Reception : $f_{MS}' = f_{BS}+\triangle f_{MS}$

$\triangle f_{MS}$

BS

Transmission : $f_{MS} = f_{MS}'+f_{cont}-f_{offset}$

MS

Reception : $f_{BS}' = f_{MS}+\triangle f_{BS} = f_{BS}+\triangle f_{MS}+f_{cont}-f_{offset}+\triangle f_{BS}$

# FIG. 5

Start of Base Station's Process

Start Transmission-and-Reception Loop — $S_{BS}1$

Operate on the Basis of Frequency $f_{BS}$ — $S_{BS}2$

Perform Downlink Transmission at Frequency $f_{BS}$
Notify $f_{cont}$ as Well — $S_{BS}3'$

Perform Uplink Reception at
Frequency $f_{BS}'=f_{BS}+\triangle f_{MS}+f_{cont}-f_{offset}+\triangle f_{BS}$ — $S_{BS}4$

Detect $\triangle f_{BS}$ — $S_{BS}5$

End Transmission-and-Reception Loop — $S_{BS}6$

End of Base Station's Process

# FIG. 6

Start of Mobile Station's Process

Start Transmission-and-Reception Loop — $S_{MS}1$

Operate on the Basis of Frequency $f_{MS}'$ — $S_{MS}2$

Perform Downlink Reception at Frequency
$f_{MS}'=f_{BS}+\triangle f_{MS}$
Acquire $f_{cont}$ as Well — $S_{MS}3$

Detect $\triangle f_{MS}$ — $S_{MS}4$

Adjust Operating Frequency (TCXO) to $f_{MS}'+ f_{cont}$ — $S_{MS}5$

Perform Uplink Transmission at Frequency
$f_{MS}=f_{MS}'+f_{cont}-f_{offset}$
Notify $\triangle f_{MS}$ as Well — $S_{MS}6'$

End Transmission-and-Reception Loop — $S_{MS}7$

End of Mobile Station's Process

# FIG. 7

Transmission : $f_{BS1}$

Reception : $f_{MS1}' = f_{BS1} + \triangle f_{MS1}$
Reception : $f_{MS2}' = f_{BS2} + \triangle f_{MS2}$

Transmission : $f_{BS2}$

$f_{cont1}$

$f_{cont2}$

$\triangle f_{MS1}$

$\triangle f_{MS2}$

**BS1**

Transmission : $f_{MS1} = f_{MS1}' + f_{cont1} - f_{offset}$
or $f_{MS1} = f_{MS1}' + f_{cont2} - f_{offset}$

**MS**

Transmission : $f_{MS2} = f_{MS2}' + f_{cont1} - f_{offset}$
or $f_{MS2} = f_{MS2}' + f_{cont2} - f_{offset}$

**BS2**

Reception : $f_{BS1}' = f_{MS1} + \triangle f_{BS11} = f_{BS1} + \triangle f_{MS1} + f_{cont1} - f_{offset} + \triangle f_{BS11}$
or $f_{BS1}' = f_{MS1} + \triangle f_{BS21} = f_{BS1} + \triangle f_{MS1} + f_{cont2} - f_{offset} + \triangle f_{BS21}$

Reception : $f_{BS2}' = f_{MS2} + \triangle f_{BS12} = f_{BS2} + \triangle f_{MS2} + f_{cont1} - f_{offset} + \triangle f_{BS12}$
or $f_{BS2}' = f_{MS2} + \triangle f_{BS22} = f_{BS2} + \triangle f_{MS2} + f_{cont2} - f_{offset} + \triangle f_{BS22}$

# FIG.8

```
         ( Start of Base Station's Process )
                        │
                        ▼
┌──────────────────────────────────────────────┐
│     Start Transmission-and-Reception Loop      ╲───S_BS1
└──────────────────────────────────────────────┘
                        │
                        ▼
┌──────────────────────────────────────────────┐
│      Operate on the Basis of Frequency f_BSi   │───S_BS2'
└──────────────────────────────────────────────┘
                        │
                        ▼
┌──────────────────────────────────────────────┐
│ Perform Downlink Transmission at Frequency f_BSi │──S_BS3"
│            Notify f_conti as Well              │
└──────────────────────────────────────────────┘
                        │
                        ▼
┌──────────────────────────────────────────────┐
│       Perform Uplink Reception at Frequency    │──S_BS4'
│ f_BSi'=f_BSi+△f_MSi+f_conti-f_offset+△f_BSij   │
└──────────────────────────────────────────────┘
                        │
                        ▼
┌──────────────────────────────────────────────┐
│              Detect △f_BSij                     │──S_BS5'
└──────────────────────────────────────────────┘
                        │
                        ▼
┌──────────────────────────────────────────────┐
╲      End Transmission-and-Reception Loop        ╲──S_BS6
└──────────────────────────────────────────────┘
                        │
                        ▼
         ( End of Base Station's Process )
```

The process performs:

- **S_BS1**: Start Transmission-and-Reception Loop
- **S_BS2'**: Operate on the Basis of Frequency $f_{BSi}$
- **S_BS3"**: Perform Downlink Transmission at Frequency $f_{BSi}$, Notify $f_{conti}$ as Well
- **S_BS4'**: Perform Uplink Reception at Frequency $f_{BSi}' = f_{BSi} + \triangle f_{MSi} + f_{conti} - f_{offset} + \triangle f_{BSij}$
- **S_BS5'**: Detect $\triangle f_{BSij}$
- **S_BS6**: End Transmission-and-Reception Loop

# FIG. 9

```
        ( Start of Mobile Station's Process )
                        │
                        ▼
    ╭──────────────────────────────────────╮
    │  Start Transmission-and-Reception Loop │ ~ S_MS1
    ╰──────────────────────────────────────╯
                        │
                        ▼
    ┌──────────────────────────────────────┐
    │  Operate on the Basis of Frequency f_MSi'  │ ~ S_MS2'
    └──────────────────────────────────────┘
                        │
                        ▼
    ┌──────────────────────────────────────┐
    │  Perform Downlink Reception at Frequency │
    │  f_MSi'=f_BSi+△f_MSi                    │ ~ S_MS3'
    │  Acquire f_conti as Well                │
    └──────────────────────────────────────┘
                        │
                        ▼
    ┌──────────────────────────────────────┐
    │  Detect △f_MSi                          │ ~ S_MS4'
    └──────────────────────────────────────┘
                        │
                        ▼
    ┌──────────────────────────────────────┐
    │  Adjust Operating Frequency (TCXO) to f_MS'+f_conti │ ~ S_MS5'
    └──────────────────────────────────────┘
                        │
                        ▼
    ┌──────────────────────────────────────┐
    │  Perform Uplink Transmission at Frequency │
    │  f_MSi=f_MSi'+f_conti-f_offset          │ ~ S_MS6"
    │  Notify △f_MSi as Well                  │
    └──────────────────────────────────────┘
                        │
                        ▼
    ╰──────────────────────────────────────╯
    │  End Transmission-and-Reception Loop    │ ~ S_MS7
    ╭──────────────────────────────────────╮
                        │
                        ▼
        ( End of Mobile Station's Process )
```

Start of Mobile Station's Process

Start Transmission-and-Reception Loop — $S_{MS}1$

Operate on the Basis of Frequency $f_{MSi}'$ — $S_{MS}2'$

Perform Downlink Reception at Frequency
$f_{MSi}'=f_{BSi}+\triangle f_{MSi}$
Acquire $f_{conti}$ as Well — $S_{MS}3'$

Detect $\triangle f_{MSi}$ — $S_{MS}4'$

Adjust Operating Frequency (TCXO) to $f_{MS}'+f_{conti}$ — $S_{MS}5'$

Perform Uplink Transmission at Frequency
$f_{MSi}=f_{MSi}'+f_{conti}-f_{offset}$
Notify $\triangle f_{MSi}$ as Well — $S_{MS}6''$

End Transmission-and-Reception Loop — $S_{MS}7$

End of Mobile Station's Process

## INTERNATIONAL SEARCH REPORT

| | International application No. |
|---|---|
| | PCT/JP2006/314676 |

**A.  CLASSIFICATION OF SUBJECT MATTER**
*H04B7/26(2006.01)ii*

According to International Patent Classification (IPC) or to both national classification and IPC

**B.  FIELDS SEARCHED**

Minimum documentation searched (classification system followed by classification symbols)
H04B7/24-7/26, H04Q7/00-7/38

Documentation searched other than minimum documentation to the extent that such documents are included in the fields searched
| Jitsuyo Shinan Koho | 1922-1996 | Jitsuyo Shinan Toroku Koho | 1996-2006 |
| Kokai Jitsuyo Shinan Koho | 1971-2006 | Toroku Jitsuyo Shinan Koho | 1994-2006 |

Electronic data base consulted during the international search (name of data base and, where practicable, search terms used)

**C.  DOCUMENTS CONSIDERED TO BE RELEVANT**

| Category* | Citation of document, with indication, where appropriate, of the relevant passages | Relevant to claim No. |
|---|---|---|
| X<br>Y | JP 10-200471 A  (Alcatel Alsthom Compagnie<br>Generale D'electricite),<br>31 July, 1998 (31.07.98),<br>Claim 1; Par. Nos. [0030] to [0038]<br>& EP 848509 A1          & FR 2757339 A1<br>& CA 2222408 A | 1-3<br>4-15 |
| Y | JP 2000-013310 A  (Hitachi, Ltd.),<br>14 January, 2000 (14.01.00),<br>Par. No. [0060]<br>(Family: none) | 4-15 |

| ☐ | Further documents are listed in the continuation of Box C. | ☐ | See patent family annex. |
|---|---|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered   to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 25 October, 2006 (25.10.06) | 07 November, 2006 (07.11.06) |

| Name and mailing address of the ISA/ | Authorized officer |
|---|---|
| Japanese Patent Office | |
| Facsimile No. | Telephone No. |

Form PCT/ISA/210 (second sheet) (April 2005)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002026769 A